# EUROPÄISCHE PATENTSCHRIFT

(11) **EP 2 376 816 B1**
(45) Veröffentlichungstag und Bekanntmachung des Hinweises auf die Patenterteilung: **09.01.2013**
(21) Anmeldenummer: 10700851.8
(22) Anmeldetag: 13.01.2010
(51) Int. Cl.: F16H 61/04, F16H 63/50

(54) **VERFAHREN ZUM BETREIBEN EINES FAHRZEUGANTRIEBSSTRANGES**
METHOD FOR OPERATING A VEHICLE DRIVE TRAIN
PROCÉDÉ PERMETTANT DE FAIRE FONCTIONNER UNE CHAÎNE CINÉMATIQUE D'UN VÉHICULE

(30) Priorität: 15.01.2009 DE 102009000252
(43) Veröffentlichungstag der Anmeldung: 19.10.2011
(73) Patentinhaber: ZF Friedrichshafen AG, 88038 Friedrichshafen (DE)
(72) Erfinder: CÜPPERS, Ruben, 88239 Wangen (DE); HERBETH, Valentine, 88045 Friedrichshafen (DE)
(86) Internationale Anmeldenummer: PCT/EP2010/050340
(87) Internationale Veröffentlichungsnummer: WO 2010/081818

(56) Entgegenhaltungen:
- EP-A1- 0 873 902
- WO-A1-03/054420
- DE-A1-102004 041 446
- DE-A1-102006 002 122
- DE-A1-102008 001 566
- DE-C1- 19 844 783
- US-A1- 2004 242 372
- US-A1- 2004 242 373

## Beschreibung

Die Erfindung betrifft ein Verfahren zum Betreiben eines Fahrzeugantriebsstranges gemäß dem im Oberbegriff des Patentanspruchs 1 näher definierten Art, wie auch der DE 198 44 783 C1 bekannt.

Aus der Praxis bekannte Fahrzeugantriebsstränge werden in zunehmendem Umfang mit Automatgetrieben mit reibschlüssigen Schaltelementen, wie Lamellenkupplungen oder-bremsen, ausgeführt. Bei Vorliegen einer Schaltanforderung für einen Übersetzungswechsel im Automatgetriebe ist wenigstens ein reibschlüssiges Schaltelement, welches zur Darstellung der aktuell im Automatgetriebe eingelegten Übersetzung in den Kraftfluss des Automatgetriebes zugeschaltet ist, aus dem Kraftfluss des Automatgetriebes abzuschalten, während wenigstens ein weiteres reibschlüssiges Schaltelement, welches während der Darstellung der aktuell im Automatgetriebe eingelegten Übersetzung aus dem Kraftfluss des Automatgetriebes abgeschaltet ist, zur Darstellung der angeforderten Übersetzung in den Kraftfluss des Automatgetriebes zuzuschalten ist.

Dabei wird das über das zur Darstellung der aktuellen Übersetzung des Automatgetriebes in den Kraftfluss zugeschaltete reibschlüssige Schaltelement geführte Drehmoment mit zunehmender Schaltzeit mehr und mehr von dem zur Darstellung der angeforderten Übersetzung in den Kraftfluss des Automatgetriebes zuzuschaltenden reibschlüssigen Schaltelement übertragen, während das über das abzuschaltende Schaltelement führbare Drehmoment abnimmt. Ein solches Automatgetriebe zeigt die DE 102004041446 A1.

Nachteilhafterweise verursachen reibschlüssige Schaltelemente in geöffnetem Betriebszustand Schleppmomente, welche einen Gesamtwirkungsgrad eines Automatgetriebes in unerwünschtem Umfang beeinträchtigen.

Aus diesem Grund werden Automatgetriebe neben reibschlüssigen Schaltelementen auch mit formschlüssigen Schaltelementen ausgeführt, in deren Bereich keine den Gesamtwirkungsgrad eines Automatgetriebes beeinträchtigende Schleppmomente auftreten.

Formschlüssige Schaltelemente sind jedoch nur nahe ihres Synchronpunktes aus einem geöffneten Betriebszustand, in welchem kein Drehmoment über die formschlüssigen Schaltelemente führbar ist, in ihren geschlossenen Betriebszustand, in dem das gesamte anliegende Drehmoment über die formschlüssigen Schaltelemente führbar ist, umschaltbar. Zusätzlich sind in den Kraftfluss einer Getriebeeinrichtung zugeschaltete formschlüssige Schaltelemente mit geringen Schaltkräften nur nahe ihres lastfreien Betriebszustandes aus dem Kraftfluss abschaltbar. Sowohl zum Synchronisieren von formschlüssigen Schaltelementen als auch zum Überführen formschlüssiger Schaltelemente in ihren lastfreien Zustand sind im Gegensatz zu reibschlüssigen Schaltelementen zusätzliche konstruktive Einrichtungen erforderlich, um Schaltungen in Getriebeeinrichtungen, an welchen wenigstens ein formschlüssiges Schaltelement beteiligt ist, innerhalb gewünschter Schaltzeiten durchführen zu können. Ein Getriebe mit formschlüssigen Schaltelementen und einer zusätzlichen Einrichtung zum Synchronisieren zeigt die DE 19844783 C1, welche alle Merkmale des Oberbegriffs des Anspruchs 1 offenbart.

Derartige zusätzliche konstruktive Einrichtungen erhöhen jedoch unerwünschterweise sowohl die Herstellkosten einer Getriebeeinrichtung als auch deren Bauraumbedarf.

Der vorliegenden Erfindung liegt daher die Aufgabe zugrunde, ein Verfahren zum Betreiben eines Fahrzeugsantriebsstranges zur Verfügung zu stellen, mittels welchem Schaltungen von Getriebeeinrichtungen, insbesondere von Automatgetrieben, an welchen wenigstens ein formschlüssiges Schaltelement

beteiligt ist, innerhalb gewünschter Schaltzeiten kostengünstig und mit geringem Bauraumbedarf insbesondere im Bereich einer Getriebeeinrichtung durchführen zu können.

Erfindungsgemäß wird diese Aufgabe mit einem Verfahren mit den Merkmalen des Patentanspruchs 1 gelöst.

Bei dem erfindungsgemäßen Verfahren zum Betreiben eines Fahrzeugantriebsstranges mit einer Antriebsmaschine und einer Getriebeeinrichtung wird während einer Schubhochschaltung wenigstens ein zur Darstellung der auszulegenden Übersetzung in den Kraftfluss der Getriebeeinrichtung zugeschaltetes formschlüssiges Schaltelement aus dem Kraftfluss abgeschaltet und wenigstens ein zur Darstellung der einzulegenden Übersetzung in den Kraftfluss der Getriebeeinrichtung zuzuschaltendes reibschlüssiges Schaltelement in den Kraftfluss zugeschaltet, wobei bei Vorliegen einer Schaltanforderung für einen Übersetzungswechsel ein am abzuschaltenden formschlüssigen Schaltelement anliegendes Schubelement durch einen definierten Motoreingriff im Bereich der Antriebsmaschine wenigstens annähernd auf Null abgesenkt wird und das formschlüssige Schaltelement aus dem Kraftfluss abgeschaltet wird. Hierbei wird das zuzuschaltende reibschlüssige Schaltelement vor dem Abschaltzeitpunkt des formschlüssigen Schaltelements durch Aufbringen einer definierten Betätigungskraft zumindest für die Zuschaltungen in den Kraftfluss der Getriebevorrichtung vorbereitet, womit angeforderte Schubhochschaltungen innerhalb kurzer Schaltzeiten durchführbar sind. Die definierte Betätigungskraft des zuzuschaltenden reibschlüssigen Schaltelementes wird bei Vorliegen einer Übertragungsfähigkeit des zuzuschaltenden reibschlüssigen Schaltelementes, zu der Drehmoment über das zuzuschaltenden reibschlüssige Schaltelement führbar ist, auf einen Wert eingestellt, zu dem die Übertragungsfähigkeit des zuzuschaltenden reibschlüssigen Schaltelementes wenigstens annährend Null ist, womit das abzuschaltende formschlüssige Schaltelement durch den Motoreingriff im Bereich der Antriebsmaschine sicher in einen wenigstens annähernd lastfreien Betriebszustand überführbar ist.

Mittels des erfindungsgemäßen Verfahrens wird bei einer angeforderten Schubhochschaltung, bei welcher das aus dem Kraftfluss der Getriebeeinrichtung aus dem Kraftfluss abzuschaltende Schaltelement als formschlüssiges Schaltelement und das zuzuschaltende Schaltelement als reibschlüssiges Schaltelement ausgeführt ist, das am abzuschaltenden formschlüssigen Schaltelement anliegende Schubmoment ohne zusätzliche konstruktive Einrichtungen abgebaut, da das abzuschaltende formschlüssige Schaltelement mittels eines definierten Motoreingriffs in einen im Wesentlichen lastfreien Zustand überführt wird.

Damit sind Übersetzungswechsel in Getriebeeinrichtungen, insbesondere in Automatgetrieben, bei welchen ein aus dem Kraftfluss abzuschaltendes Schaltelement ein formschlüssiges Schaltelement ist, innerhalb vordefinierter bzw. gewünschter Schaltzeiten ohne die Fertigungskosten einer Getriebeeinrichtung erhöhende zusätzliche konstruktive Einrichtungen in gewünschtem Umfang durchführbar.

Ein Antriebsmoment der Antriebsmaschine des Fahrzeugantriebsstranges wird bei einer vorteilhaften Variante des Verfahrens nach der Erfindung während des definierten Motoreingriffs um einen Drehmomentwert verändert, der dem von der Antriebsmaschine am Abtrieb des Fahrzeugantriebsstranges anzulegenden Schubmoment wenigstens annähernd entspricht. Damit wird das abzuschaltende formschlüssige Schaltelement ohne weitere Maßnahmen in einen wenigstens annähernd lastfreien Betriebszustand überführt.

Das Antriebsmoment der Antriebsmaschine wird bei einer weiteren vorteilhaften Variante des Verfahrens nach der Erfindung während des definierten Motoreingriffs um einen Drehmomentwert verändert, der wenigstens annähernd der Summe aus dem von der Antriebsmaschine am Abtrieb des Fahrzeugantriebsstranges angelegten Schubmoment und dem über das zuzuschaltende reibschlüssige Schaltelement führbaren Drehmoment entspricht, wenn das zuzuschaftende reibschlüssige Schaltelement mit einer Übertragungsfähigkeit vorliegt, zu der über das zuzuschaltende reibschlüssige Schaltelement ein Drehmoment führbar ist.

Der Drehmomentwert der Antriebsmaschine wird bei einer weiteren vorteilhaften Variante des erfindungsgemäßen Verfahrens in Abhängigkeit des Betriebszustandes des Fahrzeugantriebsstranges adaptiert, um eine angeforderte Schaltung innerhalb einer gewünschten Schaltzeit durchführen zu können.

Bei einer Variante des Verfahrens nach der Erfindung wird der Wert der Betätigungskraft des zuzuschaltenden reibschlüssigen Schaltelements in Abhängigkeit des Betriebszustandes des Fahrzeugantriebsstranges adaptiert.

Weitere Vorteile und vorteilhafte Weiterbildungen der Erfindung ergeben sich aus den Patentansprüchen und dem unter Bezugnahme auf die Zeichnung prinzipmäßig beschriebenen Ausführungsbeispiel.

Es zeigt:
- Fig. 1: eine stark schematisierte Darstellung eines Fahrzeugantriebsstranges; und
- Fig. 2: mehrere Verläufe verschiedener Betriebszustandsparameter des Fahrzeugantriebsstranges gemäß Fig. 1 über der Zeit t.

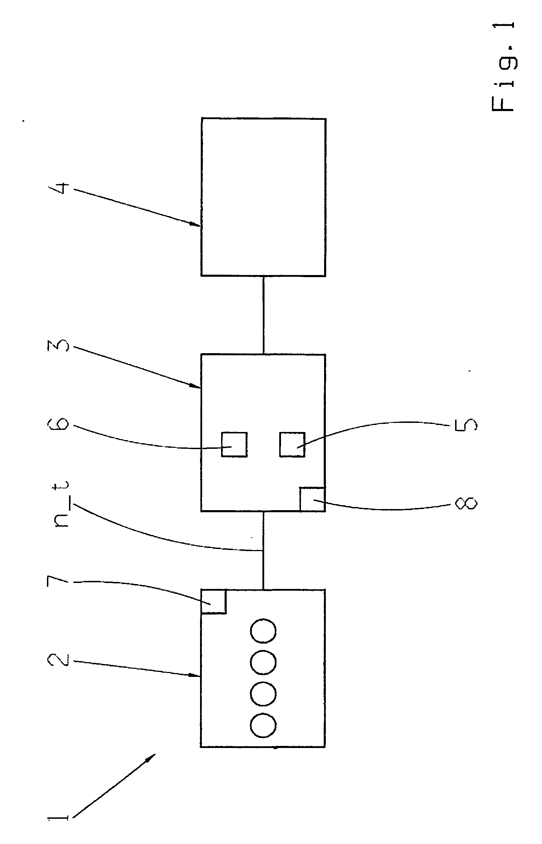

Fig. 1 zeigt einen Fahrzeugantriebsstrang 1 mit einer vorliegend als Brennkraftmaschine ausgeführten Antriebsmaschine 2, einer Getriebeeinrichtung 3 und einem Abtrieb 4, wobei die Getriebeeinrichtung ein Automatgetriebe ist. Die Getriebeeinrichtung 3 ist mit mehreren reibschlüssigen Schaltelementen 5 und wenigstens einem formschlüssigen Schaltelement 6 ausgebildet, um betriebszustandsabhängig bzw. in Abhängigkeit von Schaltanforderungen verschiedene Übersetzungen für Vorwärtsfahrt und Rückwärtsfahrt darstellen zu können.

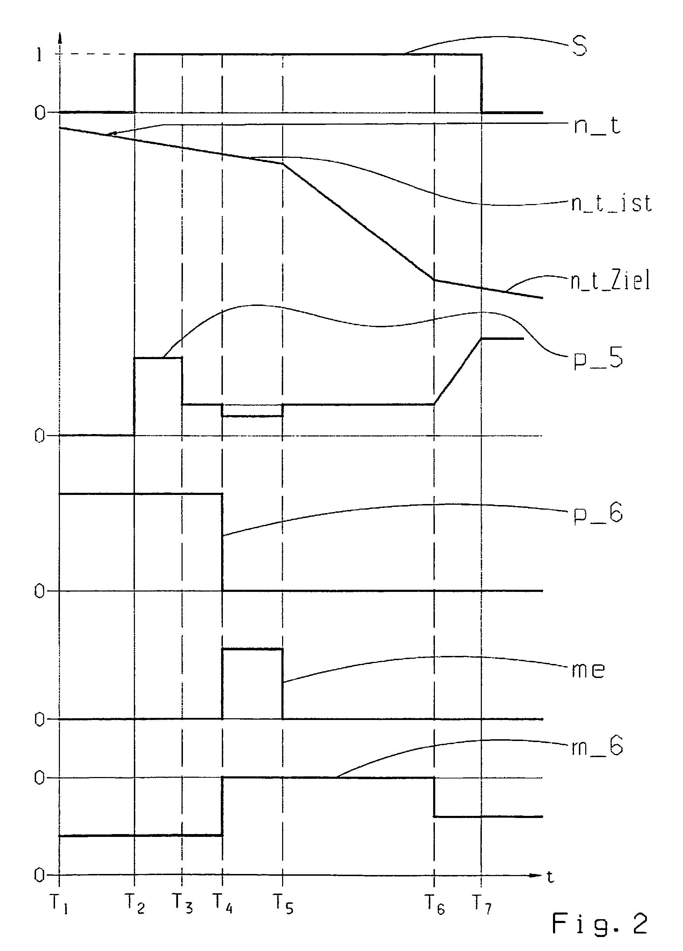

Bei Vorliegen einer Schaltanforderung für einen Übersetzungswechsel in der Getriebeeinrichtung 3 bzw. zur Durchführung einer Schubhochschaltung, während der ein zur Darstellung der aktuellen der Getriebeeinrichtung 3 eingelegten Übersetzung in den Kraftfluss zugeschaltetes formschlüssiges Schaltelement 6 aus dem Kraftfluss abzuschalten ist und wenigstens eines der reibschlüssigen Schaltelemente 5 in den Kraftfluss der Getriebeeinrichtung 3 zuzuschalten ist, wird das nachfolgend anhand der Darstellung in Fig. 2 näher beschriebene Verfahren durchgeführt, um die angeforderte Schubhochschaltung innerhalb einer vordefinierten Schaltzeit ohne zusätzliche konstruktive Einrichtungen mit hohem Schaltkomfort durchführen zu können.

Zu einem Zeitpunkt T2 ergeht eine Schaltanforderung für eine Schubhochschaltung in der Getriebeeinrichtung 3. Der Verlauf S, der den Status der Schaltanforderung wiedergibt, springt zum Zeitpunkt T2 vom Wert Null auf den Wert Eins um. Ein Verlauf einer Turbinendrehzahl n_t, die zu einer Getriebeeingangsdrehzahl der Getriebeeinrichtung 3 äquivalent ist, entspricht zum Zeitpunkt T1 der Synchrondrehzahl n_t_ist der in der aktuellen Getriebeeinrichtung 3 eingelegten Übersetzung.

Das zuzuschaltende reibschlüssige Schaltelement 5 wird in der in Fig. 2 dargestellten Art und Weise über einen variierenden Betätigungsdruck p_5 während einer bis zu einem Zeitpunkt T3 andauernden Schnellfüllphase und einer sich daran anschließenden und bis zu einem Zeitpunkt T4 andauernden Füllausgleichsphase in an sich bekannter Art und Weise vor einem Abschaltzeitpunkt T5 des formschlüssigen Schaltelementes 6 für die Zuschaltung in den Kraftfluss des Automatgetriebes 3 bzw. des Fahrzeugantriebsstranges 1 vorbereitet.

Zu einem Zeitpunkt T4 wird im Bereich der Antriebsmaschine 2 ein positiver Motoreingriff durchgeführt, während dem ein Antriebsmoment der Antriebsmaschine 2 um einen dem am Abtrieb 4 anliegenden Schubmoment entsprechenden Drehmomentwert verändert wird, womit ein am abzuschaltenden formschlüssigen Schaltelement 6 anliegendes Drehmoment m_6 im Wesentlichen Null wird. Gleichzeitig wird der Betätigungsdruck p_6 des abzuschaltenden formschlüssigen Schaltelements 6 im Wesentlichen auf Null abgesenkt, wodurch das formschlüssige Schaltelement 6, welches vorliegend als eine in Öffnungsrichtung federvorgespannte Klauenkupplung ausgeführt ist, aufgrund einer Federvorspannung in einen geöffneten Betriebszustand übergeht und aus dem Kraftfluss der Getriebeeinrichtung 3 abgeschaltet ist.

Zu einem Zeitpunkt T5 wird der Motoreingriff der Antriebsmaschine 2, dessen Status in Fig. 2 durch den Verlauf me graphisch wiedergegeben ist, wieder aufgehoben. Dies führt dazu, dass die Turbinendrehzahl n_t in Abhängigkeit der Übertragungsfähigkeit des zuzuschaltenden reibschlüssigen Schaltelementes 5 von der Synchrondrehzahl n_t_ist der auszulegenden Übersetzung in Richtung der Synchrondrehzahl n_t_ziel der in der Getriebeeinrichtung 3 einzulegenden Übersetzung geführt wird und diese zum Zeitpunkt T6 erreicht wird. Die Übertragungsfähigkeit des zuzuschaltenden reibschlüssigen Schaltelements 5 wird zwischen den Zeitpunkten T6 und Zeitpunkt T7 auf die volle Übertragungsfähigkeit des reibschlüssigen Schaltelements 5 angehoben, womit die Schaltanforderung zum Zeitpunkt T7 abgeschlossen bzw. durchgeführt ist und der Verlauf S vom Wert Eins wieder auf den Wert Null umspringt.

Mittels des erfindungsgemäßen Verfahrens wird das abzuschaltende formschlüssige Schaltelement 6 durch den Motoreingriff und optional durch eine zusätzliche Druckadaption des Betätigungsdrucks p_5 des zuzuschaltenden reibschlüssigen Schaltelementes 5 in einen lastfreien Zustand überführt und anschließend aus dem Kraftfluss der Getriebeeinrichtung 3 abgeschaltet.

Hierfür wird bei Vorliegen der Schaltanforderung zum Zeitpunkt T2 zunächst das zuzuschaltende reibschlüssige Schaltelement 5 mittels eines Schnellfüllpulses vorbefüllt. Anschließend wird der Motoreingriff zwischen den Zeitpunkten T4 und T5 durchgeführt und das am formschlüssigen Schaltelement 6 anliegende Schubmoment reduziert bzw. lastfrei geschaltet.

Falls das für die Zuschaltung vorbereitete reibschlüssige Schaltelement 5 mit einer Übertragungsfähigkeit vorliegt, zu der Drehmoment über das reibschlüssige Schaltelement 5 führbar ist, wird der Betätigungsdruck p_5 des reibschlüssigen Schaltelementes 5 zwischen den Zeitpunkten T4 und T5 um einen vordefinierten Druckoffsetwert abgesenkt und die Übertragungsfähigkeit des reibschlüssigen Schaltelements 5 im Wesentlichen auf Null abgesenkt, womit das formschlüssige Schaltelement 6 wiederum vollständig lastfrei geschaltet ist und geöffnet werden kann. Anschließend wird der Motoreingriff zum Zeitpunkt T5 zurückgenommen und der Betätigungsdruck p_5 des zuzuschaltenden reibschlüssigen Schaltelementes um den Druckoffsetwert angehoben. Nach Ablauf der vordefinierten Schaltzeit, nach der die Turbinendrehzahl n_t die Synchrondrehzahl n_t_ziel des neuen Ganges erreicht hat, wird das zuzuschaltende reibschlüssige Schaltelement zwischen den Zeitpunkten T6 und T7 vollständig geschlossen.

Die Höhe des Motoreingriffs entspricht dem von der Antriebsmaschine 2 erzeugten Schubmoment, welches von einem Motorsteuergerät 7 der Antriebsmaschine 2 ermittelt und einem Getriebesteuergerät 8 der Getriebeeinrichtung 3 zugeführt wird. Der Druckoffsetwert des Betätigungsdruckes p_5 des zuzuschaltenden reibschlüssigen Schaltelementes 5 wird in Abhängigkeit des jeweils vorliegenden Betriebszustandes des Fahrzeugantriebsstranges 1 variiert, wobei der Druckoffsetwert auch in Abhängigkeit verschiedener Ereignisse adaptierbar ist.

Dabei ist der Druckoffsetwert des Betätigungsdrucks p_5 des zuzuschaltenden reibschlüssigen Schaltelementes 5 eine Funktion der Temperatur der Getriebeeinrichtung 3 sowie weiterer Betriebsparameter des Fahrzeugantriebsstranges 1 und ist zudem in Abhängigkeit der Lebensdauer der Getriebeeinrichtung 3 veränderbar.

### Bezugszeichen

- 1: Fahrzeugantriebsstrang
- 2: Antriebsmaschine
- 3: Getriebeeinrichtung
- 4: Abtrieb
- 5: reibschlüssiges Schaltelement
- 6: formschlüssiges Schaltelement
- 7: Motorsteuergerät
- 8: Getriebesteuergerät
- me: Verlauf
- m_6: Drehmoment
- n_t: Turbinendrehzahl
- n_t_ist: Synchrondrehzahl
- n_t_ziel: Synchrondrehzahl
- p_5: Betätigungsdruck
- p_6: Betätigungsdruck
- S: Verlauf
- T1 bis T6: Zeitpunkt
- t: Zeit

## Patentansprüche

1. Verfahren zum Betreiben eines Fahrzeugantriebsstranges (1) mit einer Antriebsmaschine (2) und mit einer Getriebeeinrichtung (3) während einer Schubhochschaltung, während der wenigstens ein zur Darstellung der auszulegenden Übersetzung in den Kraftfluss der Getriebeeinrichtung (3) zugeschaltetes formschlüssiges Schaltelement (6) aus dem Kraftfluss abgeschaltet und wenigstens ein zur Darstellung der einzulegenden Übersetzung in den Kraftfluss der Getriebeeinrichtung (3) zuzuschaltendes reibschlüssiges Schaltelement (5) in den Kraftfluss zugeschaltet wird, wobei bei Vorliegen einer Schaltanforderung für einen Übersetzungswechsel ein am abzuschaltenden formschlüssigen Schaltelement (6) anliegendes Drehmoment m_6 durch einen definierten Motoreingriff wenigstens annähernd auf Null abgesenkt wird und das formschlüssige Schaltelement (6) aus dem Kraftfluss der Getriebeeinrichtung (3) abgeschaltet wird, **dadurch gekennzeichnet, dass** das zuzuschaltende reibschlüssige Schaltelement (5) vor einem Abschaltzeitpunkt T5 des formschlüssigen Schaltelementes (6) durch Aufbringen einer definierten Betätigungskraft zumindest für die Zuschaltung in den Kraftfluss der Getriebeeinrichtung (3) vorbereitet wird und wobei die definierte Betätigungskraft des zuzuschaltenden reibschlüssigen Schaltelementes (5) bei Vorliegen einer Übertragungsfähigkeit des zuzuschaltenden reibschlüssigen Schaltelementes (5), zu der ein Drehmoment über das zuzuschaltende reibschlüssige Schaltelement (5) führbar ist, auf einen Wert eingestellt wird, zu dem die Übertragungsfähigkeit des zuzuschaltenden reibschlüssigen Schaltelementes (5) wenigstens annähernd Null ist.

2. Verfahren nach Anspruch 1, **dadurch gekennzeichnet, dass** ein Antriebsmoment der Antriebsmaschine (2) während des definierten Motoreingriffs um einen Drehmomentwert verändert wird, der dem von der Antriebsmaschine (2) am Abtrieb (4) des Fahrzeugantriebsstranges (1) anzulegenden Schubmoment wenigstens annähernd entspricht.

3. Verfahren nach Anspruch 1 oder 2, **dadurch gekennzeichnet, dass** das Antriebsmoment der Antriebsmaschine (2) während des definierten Motoreingriffs um einen Drehmomentwert verändert wird, der wenigstens annähernd der Summe aus dem von der Antriebsmaschine (2) am Abtrieb (4) des Fahrzeugantriebsstranges (1) angelegten Schubmoment und dem Ober das zuzuschaltende reibschlüssige Schaltelement (5) führbaren Drehmoment entspricht.

4. Verfahren nach Anspruch 2 oder 3, **dadurch gekennzeichnet, dass** der Drehmomentwert der Antriebsmaschine (2) in Abhängigkeit des Betriebszustandes des Fahrzeuganlriebsstranges (1) adaptiert wird.

5. Verfahren nach Anspruch 1, **dadurch gekennzeichnet, dass** der Wert der Betätigungskraft des zuzuschaltenden reibschlüssigen Schaltelementes (5) in Abhängigkeit des Betriebszustandes des Fahrzeugantriebsstranges (1) adaptiert wird.

## Claims

1. Method for operating a vehicle drivetrain (1) having a drive engine (2) and having a gearbox unit (3) during an overrun upshift, during which at least one positively locking shift element (6) which has been engaged into the power flow of the gearbox unit (3) in order to realize the gear ratio to be deselected is disengaged from the power flow, and at least one frictionally locking shift element (5) which is to be engaged into the power flow of the gearbox unit (3) in order to realize the gear ratio to be selected is engaged into the power flow, wherein in the presence of a shift demand for a gear ratio change, a torque m_6 acting on the positively locking shift element (6) to be disengaged is reduced at least approximately to zero by means of a defined engine intervention and the positively locking shift element (6) is disengaged from the power flow of the gearbox unit (3), **characterized in that**, before a disengagement time T5 of the positively locking shift element (6), the frictionally locking shift element (5) to be engaged is prepared at least for the engagement into the power flow of the gearbox unit (3) by the application of a defined actuating force, and wherein, when the frictionally locking shift element (5) to be engaged exhibits a transmission capability by which a torque can be transmitted via the frictionally locking shift element (5) to be engaged, the defined actuating force of the frictionally locking shift element (5) to be engaged is set to a value at which the transmission capability of the frictionally locking shift element (5) to be engaged is at least approximately zero.

2. Method according to Claim 1, **characterized in that**, during the defined engine intervention, a drive torque of the drive engine (2) is varied by a torque value which at least approximately corresponds to the thrust torque to be applied by the drive engine (2) at the drive output (4) of the vehicle drivetrain (1).

3. Method according to Claim 1 or 2, **characterized in that**, during the defined engine intervention, the drive torque of the drive engine (2) is varied by a torque value which at least approximately corresponds to the sum of the thrust torque applied by the drive engine (2) at the drive output (4) of the vehicle drivetrain (1) and the torque that can be transmitted via the frictionally locking shift element (5) to be engaged.

4. Method according to Claim 2 or 3, **characterized in that** the torque value of the drive engine (2) is adapted as a function of the operating state of the vehicle drivetrain (1).

5. Method according to Claim 1, **characterized in that** the value of the actuating force of the frictionally locking shift element (5) to be engaged is adapted as a function of the operating state of the vehicle drivetrain (1).

## Revendications

1. Procédé pour faire fonctionner une chaîne cinématique d'un véhicule (1) comprenant une machine d'entraînement (2) et un dispositif de transmission (3), pendant un passage à une vitesse supérieure en mode de poussée, au cours duquel au moins un élément de commutation (6) à engagement positif raccordé dans le flux de force du dispositif de transmission (3) pour réaliser le rapport de transmission à quitter est déconnecté du flux de force, et au moins un élément de commutation (5) à engagement par friction à raccorder dans le flux de force du dispositif de transmission (3) pour réaliser le rapport de transmission à enclencher est raccordé dans le flux de force, procédé dans lequel, en présence d'une demande de changement de vitesse pour un changement de rapport de transmission, un couple m_6 s'appliquant à l'élément de commutation (6) à engagement positif à déconnecter est réduit par une intervention définie du moteur au moins sensiblement jusqu'à zéro et l'élément de commutation (6) à engagement positif est déconnecté du flux de force du dispositif de transmission (3), **caractérisé en ce que** l'élément de commutation (5) à engagement par friction à raccorder, avant un instant de déconnexion T5 de l'élément de commutation (6) à engagement positif, est préparé en appliquant une force d'actionnement définie au moins pour le raccordement dans le flux de force du dispositif de transmission (3) et dans lequel la force d'actionnement définie de l'élément de commutation (5) à engagement par friction à raccorder, en présence d'une possibilité de transfert de l'élément de commutation (5) à engagement par friction à raccorder, à laquelle un couple peut être transmis par le biais de l'élément de commutation (5) à engagement par friction à raccorder, est ajustée à une valeur à laquelle la possibilité de transfert de l'élément de commutation (5) à engagement par friction à raccorder est au moins approximativement nulle.

2. Procédé selon la revendication 1, **caractérisé en ce qu'**un couple d'entraînement de la machine d'entraînement (2) pendant l'intervention définie du moteur est modifié d'une valeur de couple qui correspond au moins approximativement au couple de poussée à appliquer par la machine d'entraînement (2) à la prise de force (4) de la chaîne cinématique du véhicule (1).

3. Procédé selon la revendication 1 ou 2, **caractérisé en ce que** le couple d'entraînement de la machine d'entraînement (2) est modifié pendant l'intervention définie du moteur d'une valeur de couple qui correspond au moins approximativement à la somme du couple de poussée appliqué par la machine d'entraînement (2) à la prise de force (4) de la chaîne cinématique du véhicule (1) et du couple pouvant être transmis par le biais de l'élément de commutation (5) à engagement par friction à raccorder.

4. Procédé selon la revendication 2 ou 3, **caractérisé en ce que** la valeur de couple de la machine d'entraînement (2) est adaptée en fonction de l'état de fonctionnement de la chaîne cinématique du véhicule (1).

5. Procédé selon la revendication 1, **caractérisé en ce que** la valeur de la force d'actionnement de l'élément de commutation (5) à engagement par friction à raccorder est adaptée en fonction de l'état de fonctionnement de la chaîne cinématique du véhicule (1).
